# EUROPEAN PATENT APPLICATION

(11) **EP 4 449 924 A1**
(43) Date of publication of application: **23.10.2024**
(21) Application number: 21968254.9
(22) Date of filing: 17.12.2021
(51) Int. Cl.: A24F 40/53, A24F 40/60

(54) **AEROSOL GENERATION DEVICE AND INFORMATION DISPLAY DEVICE**

(71) Applicant: Japan Tobacco Inc., Tokyo 105-6927 (JP)
(72) Inventor: FUJINO, Yusuke, Tokyo 130-8603 (JP); SEMA, Hiroaki, Tokyo 130-8603 (JP); KIRISEKO, Akito, Tokyo 130-8603 (JP); TANIYAMA, Satoru, Tokyo 130-8603 (JP)
(74) Representative: Hoffmann Eitle
(86) International application number: PCT/JP2021/046875
(87) International publication number: WO 2023/112341

(57) **Abstract**

This aerosol generation device comprises: a heating unit which receives power supplied from a battery and heats an aerosol source; a display unit for displaying the state of the aerosol generation device; and a control unit which controls, when a first condition is satisfied while the battery is being charged, the display unit to display a first image indicating that the battery is being charged, and controls, when a second condition different from the first condition is satisfied, the display unit to display a second image indicating that the battery is being charged, wherein the first image includes a first display element indicating the charging state of the battery, and the second image includes a second display element indicating the charging state of the battery and a third display element indicating the remaining amount of the aerosol source.

## Description

### Technical Field

The present invention relates to an aerosol generation device and an information display device.

### Background Art

PTL 1 discloses a non-combustion-type flavor inhaler that includes a display unit, wherein the display unit includes an operation mode display area, a flavor source usage display area, an aerosol source usage display area, and a battery usage display area.

### Citation List

### Patent Literature

PTL 1: Japanese Unexamined Patent Application Publication No. 2020-5602

### Summary of Invention

### Technical Problem

When a battery is being charged, in some instances a user is informed of the charging status of the battery via a single screen. In such instances, if the user is to be notified of not only the charging status of the battery but also other kind of information such as, for example, the remaining amount of an aerosol source, the other kind of information is displayed on the same screen or on another screen. Therefore, for example, the user cannot be notified of, in an easy-to-understand manner, the charging status of the battery while notifying the user of information other than the charging status of the battery, too.

An object of the present invention is to make it possible to, for example, notify the user, in an easy-to-understand manner, of the charging status of the battery while making it also possible to notify the user of information other than the charging status of the battery when the battery is being charged.

### Solution to Problem

To achieve the object, the present invention provides an aerosol generation device, comprising: a heating unit that receives power from a battery and heats an aerosol source; a display unit for displaying a state of the aerosol generation device; and a control unit that performs control to, when a first condition is satisfied while the battery is being charged, display on the display unit a first image representing that the battery is being charged, and performs control to, when a second condition different from the first condition is satisfied while the battery is being charged, display on the display unit a second image representing that the battery is being charged, wherein the first image includes a first display element representing a charging status of the battery, and the second image includes a second display element representing the charging status of the battery and a third display element representing a remaining amount of the aerosol source.

The second display element may be a graphic symbol of the battery, and the third display element may be a graphic symbol of a container in which the aerosol source is containable.

The first image may further include a fourth display element representing that the battery is being charged, and the second image may further include a fifth display element that is graphically different from the fourth display element representing that the battery is being charged. The second image may include the fifth display element in a state of being superposed on both the second display element and the third display element. The control unit may perform the control to, upon completion of charging of the battery, display on the display unit the second image in which a sixth display element representing that the aerosol generation device is locked is arranged in place of the fifth display element at a position where the fifth display element was arranged.

Also provided by the present invention is an information display device, comprising: a display unit for displaying a state of the information display device; and a control unit that performs control to, when a first condition is satisfied while a battery is being charged, display on the display unit a first image representing a charging status of the battery, and performs control to, when a second condition different from the first condition is satisfied while the battery is being charged, display on the display unit a second image different from the first image and representing the charging status of the battery.

The information display device may further comprise: an operation unit that is operated by a user, wherein the first condition may be a condition that charging of the battery is started, and the second condition may be a condition that the operation unit is operated, with the first image displayed on the display unit.

The first image may represent that the battery is being charged by using a graphic symbol of the battery and a graphic symbol of a cable connected to the battery, and the second image may represent that the battery is being charged by using a graphic symbol of the battery and a graphic symbol of a thunder

The control unit may perform the control to, in a case where the battery is unable to be charged, display on the display unit the first image further including a seventh display element representing that the battery is unable to be charged. Advantageous Effects of Invention

The present invention makes it possible to, for example, notify the user, in an easy-to-understand manner, of the charging status of the battery while making it also possible to notify the user of information other than the charging status of the battery when the battery is being charged.

### Brief Description of Drawings

[Fig. 1] Fig. 1 is a diagram illustrating an example of appearance of an aerosol generation device taken as the subject of a first embodiment.
[Fig. 2] Fig. 2 is a diagram for explaining how aerosol sources, etc. taken as the subject of the first embodiment are attached to a device body.
[Fig. 3] Fig. 3 is a schematic view of an internal structure of the aerosol generation device taken as the subject of the first embodiment.
[Figs. 4A and 4B] Figs. 4A and 4B are diagrams for explaining a normal mode and a high mode, wherein Fig.4A is a diagram for explaining an example of the timing of heating in the normal mode, and Fig.4B is a diagram for explaining an example of the timing of heating in the high mode.
[Figs. 5A to 5C] Figs. 5A to 5C are diagrams illustrating a being-charged-now main screen representing a charging status of a battery in the first embodiment.
[Fig. 6] Fig. 6 is a diagram illustrating a being-charged-now main screen representing that the battery cannot be charged in the first embodiment.
[Figs. 7A to 7C] Figs. 7A to 7C are diagrams illustrating a being-charged-now second screen representing the charging status of the battery for a case where a heating mode in the first embodiment is the high mode.
[Figs. 8A to 8C] Figs. 8A to 8C are diagrams illustrating a being-charged-now second screen representing the charging status of the battery for a case where the heating mode in the first embodiment is the normal mode.
[Figs. 9A and 9B] Figs. 9A is a diagram illustrating the being-charged-now second screen displayed when the charging has completed in the case where the heating mode in the first embodiment is the high mode, and Fig. 9B is a diagram illustrating the being-charged-now second screen displayed when the charging has completed in the case where the heating mode in the first embodiment is the normal mode.
[Fig. 10] Fig. 10 is a flowchart illustrating the former half of display control of a display of the aerosol generation device when an operation for charging the battery is performed in the first embodiment.
[Fig. 11] Fig. 11 is a flowchart illustrating the latter half of the display control of the display of the aerosol generation device when the operation for charging the battery is performed in the first embodiment.
[Figs. 12A to 12C] Figs. 12A to 12C are diagrams illustrating a being-charged-now second screen representing the charging status of the battery for a case where a heating mode in a second embodiment is the high mode.
[Figs. 13A to 13C] Figs. 13A to 13C are diagrams illustrating a being-charged-now second screen representing the charging status of the battery for a case where the heating mode in the second embodiment is the normal mode.
[Figs. 14A and 14B] Figs. 14A is a diagram illustrating the being-charged-now second screen displayed when the charging has completed in the case where the heating mode in the second embodiment is the high mode, and Fig. 14B is a diagram illustrating the being-charged-now second screen displayed when the charging has completed in the case where the heating mode in the second embodiment is the normal mode.

### Description of Embodiments

With reference to the accompanying drawings, embodiments of the present invention will now be described in detail.

### [First Embodiment]

### (Overview)

An aerosol generation device taken as the subject of a first embodiment is a kind of electronic cigarette. In the description below, a substance that is generated by the aerosol generation device will be referred to as "aerosol". An aerosol is a mixture of airborne tiny particles of a liquid or a solid with air or another kind of gas.

The aerosol generation device taken as the subject of the first embodiment is capable of generating an aerosol without any combustion.

In the first embodiment, the user's act of inhaling the aerosol generated by the aerosol generation device will be simply referred to as "inhalation" or "puff".

In the first embodiment, the aerosol generation device is assumed to be a device to which both a liquid aerosol source and a solid aerosol source are attachable.

In the description below, a container that contains a liquid aerosol source will be referred to as "cartridge", and a container that contains a solid aerosol source will be referred to as "capsule". Both the cartridge and the capsule are consumables. Therefore, each of the cartridge and the capsule has its own estimated life for replacement. The estimated life for replacement varies depending on the difference between heating modes to be described later.

The aerosol generation device taken as the subject of the first embodiment includes a heater configured to generate an aerosol by heating a liquid aerosol source and a heater configured to generate an aerosol by heating a solid aerosol source.

The liquid aerosol source is an example of a first aerosol source. The solid aerosol source is an example of a second aerosol source.

### (Appearance Example)

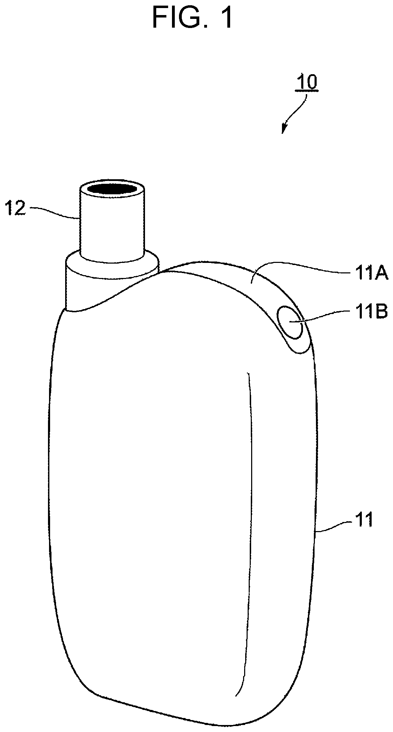

Fig. 1 is a diagram illustrating an example of appearance of an aerosol generation device 10 taken as the subject of the first embodiment.

The appearance example illustrated in Fig. 1 can be obtained by observing the front of the aerosol generation device 10 obliquely from above. The aerosol generation device 10 taken as the subject of the first embodiment has a size that is small enough for the user to hold it with one hand. For example, the aerosol generation device 10 has a width of approximately 32 mm, a height of approximately 60 mm, and a depth of approximately 23 mm. The size described here is just an example. The width, height, and depth differ depending also on the design of the aerosol generation device 10.

Fig. 1 illustrates the aerosol generation device 10 that is in a state in which a capsule holder 12 is attached to a device body 11. As will be described later, the capsule holder 12 can be detachably attached to the device body 11.

A display 11A and an operation button 11B are disposed on the top surface of the device body 11. For example, a liquid crystal display or an organic EL (Electro Luminescence) display is used as the display 11A. The operation button 11B is used for, for example, turning power ON or OFF, confirming the remaining amount of the solid aerosol source, confirming the remaining amount of the battery, and for other operations. The display 11A is an example of a display unit. The operation button 11B is an example of an operation unit.

### (Example of Attachment of Aerosol Sources, etc.)

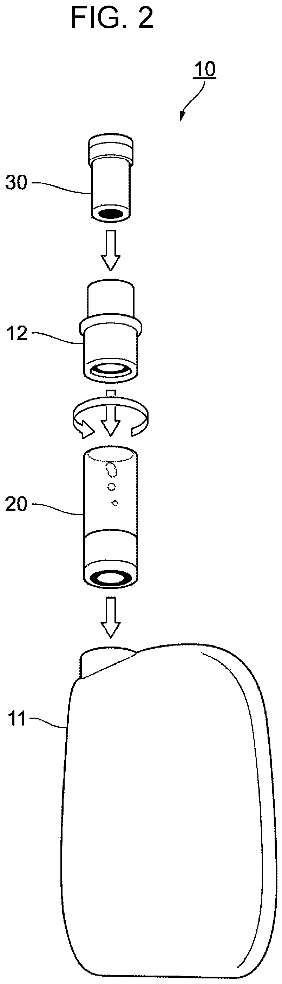

Fig. 2 is a diagram for explaining how the aerosol sources, etc. taken as the subject of the first embodiment are attached to the device body 11.

An opening that is not illustrated is provided in the top of the device body 11. The opening mentioned here constitutes an end portion of a non-illustrated tubular body provided inside the device body 11.

First, a cartridge 20 is inserted into the opening of the device body 11, followed by attachment of the capsule holder 12 thereto.

When attaching the capsule holder 12 to the opening of the device body 11 or detaching the capsule holder 12 from the opening, the user rotates the capsule holder 12 in relation to the opening by, for example, 120°.

The capsule holder 12 attached to the device body 11 functions as a stopper that prevents the cartridge 20 inserted in the device body 11 from slipping out.

The capsule holder 12 also has an opening. This opening constitutes an end portion of a non-illustrated tubular body provided inside the capsule holder 12. A capsule 30 is attached to this opening. The capsule 30 is attachable by being pushed into the opening of the capsule holder 12 and is detachable by being pulled out of the opening of the capsule holder 12.

Though the cartridge 20 is attached via the opening provided in the top surface of the device body 11 in the present embodiment, a structure for attachment from below the bottom surface of the device body 11 may be adopted.

### (Internal Structure of Device)

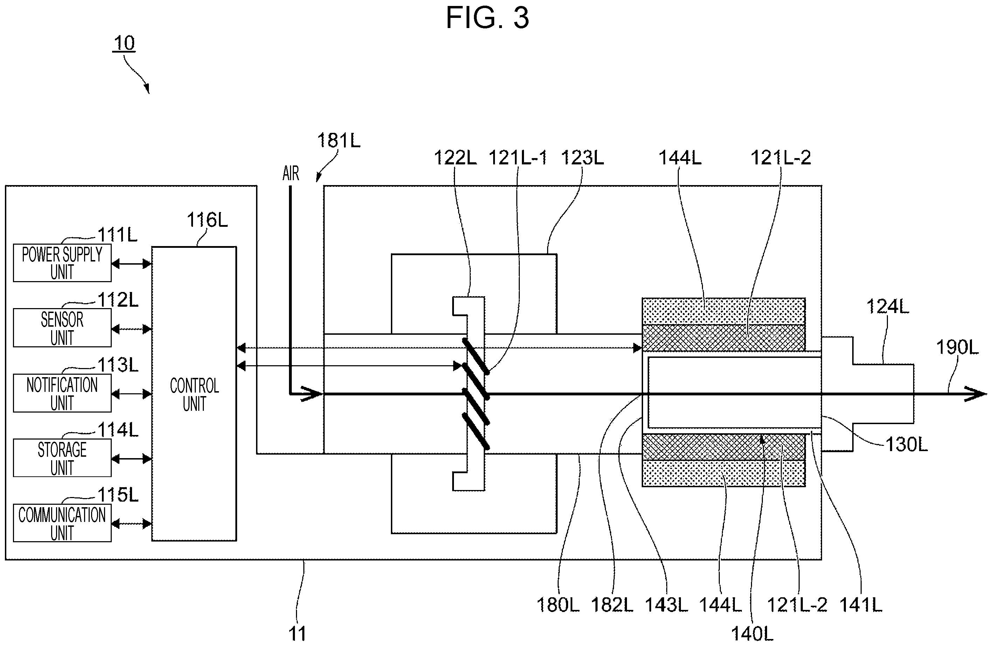

Fig. 3 is a schematic view of the internal structure of the aerosol generation device 10 taken as the subject of the first embodiment. It should be noted that, however, the internal structure mentioned here includes the cartridge 20 (see Fig. 2) and the capsule 30 (see Fig. 2) that are attached to the device body 11.

The illustration of the internal structure in Fig. 3 is intended to explain parts that are provided inside the device body 11 and explain a positional relationship among them. For this reason, the appearance of the parts, etc. illustrated in Fig. 3, does not necessarily agree with that of the external view described above.

The aerosol generation device 10 illustrated in Fig. 3 includes a power supply unit 111L, a sensor unit 112L, a notification unit 113L, a storage unit 114L, a communication unit 115L, a control unit 116L, a liquid guiding unit 122L, a liquid reservoir unit 123L, a heating unit 121L-1, a heating unit 121L-2, a holding unit 140L, and a heat insulating unit 144L.

An airflow path 180L is formed inside the device body 11. The airflow path 180L serves as a passage through which an aerosol generated from a liquid aerosol source stored in the liquid reservoir unit 123L is conveyed to a capsule-type container 130L filled with a solid aerosol source.

The liquid reservoir unit 123L corresponds to the cartridge 20 described earlier. The capsule-type container 130L corresponds to the capsule 30 described earlier.

In the present embodiment, inhalation is done by the user, with the capsule-type container 130L attached to the holding unit 140L. The holding unit 140L corresponds to the capsule holder 12 (see Fig. 2) described earlier and to the tubular body of the device body 11 to which the capsule holder 12 is attached.

Components that make up the device body 11 will be described below.

The power supply unit 111L is a device that stores power. The power supply unit 111L supplies power to components that make up the device body 11. A rechargeable battery such as a lithium ion secondary battery is used as the power supply unit 111L.

When the power supply unit 111L is a rechargeable battery, charging can be performed repeatedly from an external power supply connected via a cable such as a USB (Universal Serial Bus) cable.

Notwithstanding the above, when the device body 11 supports wireless power transmission, the power supply unit 111L can be charged in a state of not being in contact with an external device that is on the power-transmitter side.

When the power supply unit 111L is detachable from the device body 11, the power supply unit 111L having been used up can be replaced with a new power supply unit 111L.

The sensor unit 112L is a device that detects information regarding each component of the device body 11. The sensor unit 112L outputs the detected information to the control unit 116L.

Examples of the sensor unit 112L provided in the device body 11 are a pressure sensor such as a condenser microphone, a flow sensor, and a temperature sensor. The sensor unit 112L of this type is used for, for example, detecting inhalation by the user

The sensor unit 112L provided in the device body 11 is, for example, an input device configured to receive user operations on buttons, switches, and the like. The buttons mentioned here include the operation button 11B (see Fig. 1) described earlier. The sensor unit 112L of this type is used for, for example, receiving user operations.

Another example of the sensor unit 112L provided in the device body 11 is a voltmeter configured to measure a voltage between two terminals of a battery. The battery mentioned here is an example of the power supply unit 111L. In the present embodiment, the voltmeter is used for calculating the remaining amount of the battery and the charging amount thereof.

The notification unit 113L is a device configured to notify the user of information.

The notification unit 113L provided in the device body 11 is, for example, a light-emitting device such as an LED (Light Emitting Diode). When the notification unit 113L is a light-emitting device, the emission of the light-emitting device is controlled in a pattern that is in accordance with the content of the information to be notified. For example, the emission of the light-emitting device is controlled such that the pattern for a case where the user is notified of the need for charging the power supply unit 111L, the pattern for a case where the user is notified that the power supply unit 111L is now being charged, and the pattern for notification of abnormality occurrence are different from one another.

"Different emission pattern" is a concept that encompasses a color difference, a timing difference between ON and OFF, a difference in the degree of brightness during ON, and the like.

Other examples of the notification unit 113L provided in the device body 11 include a display device configured to display an image, a sound output device configured to output sound, and a vibration device configured to vibrate. These devices may each be used alone or in combination, and may be used together with or in place of the light-emitting device mentioned above. An example of the display device mentioned here is the display 11A (see Fig. 1).

The storage unit 114L stores various kinds of information regarding the operation of the device body 11. The storage unit 114L is made of, for example, a non-volatile storage medium such as a flash memory.

The information stored in the storage unit 114L includes, for example, programs to be run by the control unit 116L. The programs include application programs, besides OS (Operating System) and firmware.

Besides this, the information stored in the storage unit 114L includes information needed for controlling each component by the control unit 116L.

The information mentioned here includes information of each component detected by the sensor unit 112L described above. For example, the information mentioned here includes information regarding the heating mode that is currently being executed, information regarding the remaining amount of the solid aerosol source, and information regarding the remaining amount of the battery and the charging amount thereof. The information regarding the remaining amount of the solid aerosol source includes, besides the remaining amount itself, information for calculating the remaining amount, for example, the number of times of inhalation, the cumulative time of inhalation, and the like.

The communication unit 115L is a communication interface used for transmitting information to, and receiving information from, another device. The communication interface conforms to a wired or wireless communication standard.

Examples of the communication standard include wireless LAN (Local Area Network), wired LAN, mobile communication systems such as 4G and 5G, and the like. In the present embodiment, Wi-Fi^{®} or Bluetooth^{®} is used.

The communication unit 115L is used for, for example, causing a smartphone, a tablet-type terminal, or the like to display information regarding the inhalation by the user.

Besides this, the communication unit 115L is used for, for example, receiving update data of the programs stored in the storage unit 114L from a server.

The control unit 116L functions as an arithmetic processor and a controller and controls the operation of each of the components that make up the device body 11 by running the programs.

Electronic circuitry such as a CPU (Central Processing Unit) and a microprocessor is provided in the control unit 116L.

Besides this, a ROM (Read Only Memory) for storing programs, arithmetic parameters, and the like, and a RAM (Random Access Memory) for temporarily storing parameters that change according to circumstances, and the like may be provided in the control unit 116L.

The control unit 116L controls, for example, the supply of power from the power supply unit 111L to each component, the charging of the power supply unit 111L, the detection of information by the sensor unit 112L, the notification of information by the notification unit 113L, the storing and readout of information by the storage unit 114L, and the transmission and reception of information by the communication unit 115L.

In addition, the control unit 116L performs processing for receiving information through user operations, processing based on information outputted from each component, and the like.

The control unit 116L performs control to, among others, display a screen on the display 11A.

The liquid reservoir unit 123L is a container in which a liquid aerosol source is stored. A liquid such as, for example, polyhydric alcohol such as glycerin and propylene glycol, and water or the like, is used as the liquid aerosol source.

The liquid aerosol source may contain tobacco ingredients that give off flavor components by being heated or extracts derived from such tobacco ingredients. The liquid aerosol source may contain nicotine components.

The liquid guiding unit 122L is a part that guides the liquid aerosol source stored in the liquid reservoir unit 123L from the liquid reservoir unit 123L and holds it. The liquid guiding unit 122L has, for example, a twisted structure of a fiber material such as a glass fiber or a porous material such as a porous ceramic. The part of this kind is also called "wick".

Both ends of the liquid guiding unit 122L are connected to the inside of the liquid reservoir unit 123L. Therefore, the aerosol source stored in the liquid reservoir unit 123L spreads throughout the liquid guiding unit 122L by capillary action.

The heating unit 121L-1 is a part that generates an aerosol by applying heat to the aerosol source held by the liquid guiding unit 122L and thus atomizing it.

The shape of the heating unit 121L-1 is not limited to a coil shape illustrated in Fig. 3; it may have any other shape such as a film shape or a blade shape. The shape of the heating unit 121L-1 differs depending on the method of heating and the like. The heating unit 121L-1 is made of any material such as metal or polyimide.

The heating unit 121L-1 is disposed in proximity to the liquid guiding unit 122L. In the present embodiment, the heating unit 121L-1 is a coil made of metal and wound around the outer circumferential surface of the liquid guiding unit 122L.

The heating unit 121L-1 generates heat by receiving power supplied from the power supply unit 111L, and heats the aerosol source held by the liquid guiding unit 122L up to a vaporizing temperature. The aerosol source the temperature of which has reached the vaporizing temperature is released into air from the liquid guiding unit 122L in the form of gas but is atomized by being cooled by ambient air, thereby turning into an aerosol.

In the present embodiment, the supply of power to the heating unit 121L-1 configured to heat the liquid aerosol source is linked with the inhalation by the user. That is, power is supplied to the heating unit 121L-1 from the start of the inhalation by the user to the end of the inhalation and, upon the end of the inhalation by the user, the supply of the power to the heating unit 121L-1 is stopped.

Instead of this, the supply of power to the heating unit 121L-1 configured to heat the liquid aerosol source may be, for example, started when a particular button is pressed in a state in which no aerosol is generated and may be stopped when the/a particular button is pressed in a state in which an aerosol is generated.

The button for an aerosol generation start instruction and the button for an aerosol generation stop instruction may be physically the same button or may be different buttons.

The capsule-type container 130L is a container filled with a solid aerosol source.

The solid aerosol source may contain a granular, sheet-shaped, or powdery processed material, etc. of shredded tobacco or tobacco ingredients configured to give off flavor components by being heated. That is, the solid aerosol source may contain a substance derived from tobacco. The solid aerosol source may contain, for example, nicotine components.

Notwithstanding the above, the solid aerosol source may contain a non-tobacco-derived substance extracted from a plant other than tobacco (for example, mint, herb, or the like). The solid aerosol source may contain a flavor component such as, for example, menthol.

The holding unit 140L corresponds to, for example, the capsule holder 12 (see Fig. 2), and has an internal space 141L into which the capsule-type container 130L is attachable. The holding unit 140L has a tubular body with a bottom 143L, and defines the pillar-shaped internal space 141L.

A part of the capsule-type container 130L is held by the holding unit 140L, and the rest of it is exposed to the outside of the holding unit 140L. The portion, of the capsule-type container 130L, exposed from the holding unit 140L is used as a mouthpiece 124L. The mouthpiece 124L is held in the mouth of the user who inhales the aerosol.

An entrance for air (i.e., air inlet hole) to the holding unit 140L is provided in, for example, the bottom 143L. A hole through which air can flow in is formed in the bottom of the capsule-type container 130L. Therefore, air having flowed in through the bottom 143L passes through the inside of the capsule-type container 130L to reach the mouthpiece 124L. That is, the mouthpiece 124L serves as an exit for the air (i.e., air outlet hole).

The bottom 143L is in communication with an air outlet hole 182L of the airflow path 180L formed inside the device body 11, incidentally. The internal space 141L of the holding unit 140L is in communication with the airflow path 180L through the air outlet hole 182L.

The heating unit 121L-2 heats the solid aerosol source with which the capsule-type container 130L is filled.

The heating unit 121L-2 is made of metal, polyimide, or the like. The heating unit 121L-2 is provided at a position where it is in contact with the outer circumferential surface of a metal portion of the holding unit 140L.

The heating unit 121L-2 generates heat by receiving power supplied from the power supply unit 111L, and heats the outer circumferential surface of the capsule-type container 130L that is in contact with the metal portion of the holding unit 140L.

Therefore, heat is applied first at the position near the outer circumferential surface of the capsule-type container 130L, and the heated region thereafter spreads toward the center.

The aerosol source the temperature of which has reached the vaporizing temperature vaporizes. However, it is atomized by being cooled by ambient air, thereby turning into an aerosol.

The supply of power to the heating unit 121L-2, and heating that results from the supply of the power, are controlled by the control unit 116L.

The heat insulating unit 144L is a member configured to prevent the propagation of heat from the heating unit 121L-2 to the other structural elements of the device body 11. The heat insulating unit 144L covers at least the outer circumferential surface of the heating unit 121L-2.

The heat insulating unit 144L is made of, for example, a vacuum heat insulator or an aerogel heat insulator. The vacuum heat insulator refers to a heat insulator whose heat conduction by gas is brought as close to zero as possible by wrapping glass wool, silica (silicon powder), or the like with a resin-made film and thus producing a high-vacuum state.

As described earlier, the airflow path 180L is an air passage provided inside the device body 11. The airflow path 180L has a tubular structure that includes an air inlet hole 181L as its one end, which is the entrance for air into the airflow path 180L, and the air outlet hole 182L as its opposite end, which is the exit for the air out of the airflow path 180L.

Driven by the inhalation by the user, air flows into the airflow path 180L through the air inlet hole 181L, and the air flows out through the air outlet hole 182L to the bottom 143L of the holding unit 140L.

The liquid guiding unit 122L is disposed on the airflow path 180L at a position between its ends. The liquid-derived aerosol generated due to heating by the heating unit 121L-1 is mixed with air that has flowed in through the air inlet hole 181L. The mixture of the liquid-derived aerosol and the air flows through the inside of the capsule-type container 130L to be outputted from the mouthpiece 124L into the oral cavity of the user. This flow path is indicated by an arrow 190L in Fig. 3.

To the mixture of the liquid-derived aerosol and the air, in the process of flowing through the inside of the capsule-type container 130L, a solid-derived aerosol is added.

The concentration of the solid-derived aerosol rises when the heating control of the heating unit 121L-2 is combined therewith.

However, as will be described later, in the present embodiment, a heating mode without combination with the heating control of the heating unit 121L-2 is also available.

When not combined with the heating control of the heating unit 121L-2, the liquid-derived aerosol heats the solid aerosol source in the process of flowing through the inside of the capsule-type container 130L, thereby generating the solid-derived aerosol.

However, the amount of the solid-derived aerosol generated due to heating by the liquid-derived aerosol is smaller than in a case where the heating control of the heating unit 121L-2 is combined therewith.

### (Heating Modes)

Two heating modes are available for the aerosol generation device 10 taken as the subject of the first embodiment.

The first one of these heating modes is a first mode, which uses only the heating unit 121L-1 configured to heat the aerosol source stored in the cartridge 20 (see Fig. 2). That is, this is a heating mode in which the cartridge 20 only is heated.

This heating mode will be hereinafter referred to as "normal mode". In the normal mode, the heating unit 121L-2 configured to heat the solid aerosol source is always controlled to be OFF.

The second one of these heating modes is a second mode, which uses both the heating unit 121L-1 configured to heat the aerosol source stored in the cartridge 20 and the heating unit 121L-2 configured to heat the aerosol source with which the capsule 30 (see Fig. 2) is filled. That is, this is a heating mode in which both the cartridge 20 and the capsule 30 are heated.

This heating mode will be hereinafter referred to as "high mode". In the high mode, the heating of the cartridge 20 by the heating unit 121L-1 and the heating of the capsule 30 by the heating unit 121L-2 are performed alternately.

The switching between the heating modes is performed by, for example, holding the operation button 11B (see Fig. 1) down for two seconds or longer

For example, the heating mode is switched to the normal mode if the operation button 11B is held down for two seconds or longer during the high mode. On the contrary, the heating mode is switched to the high mode if the operation button 11B is held down for two seconds or longer during the normal mode.

In the high mode, the heating of the cartridge 20 by the heating unit 121L-1 takes precedence over the heating of the capsule 30 by the heating unit 121L-2.

That is, during the heating by the heating unit 121L-1, the heating by the heating unit 121L-2 is stopped by the control. Moreover, if an event of starting the heating of the cartridge 20 occurs during the heating of the capsule 30 by the heating unit 121L-2, the heating by the heating unit 121L-2 is stopped by the control.

In the aerosol generation device 10 taken as the subject of the first embodiment, control for avoiding concurrent execution of the heating by the heating unit 121L-1 and the heating by the heating unit 121L-2 is performed so as not to exceed the upper limit of an output current of the battery used as the power supply unit 111L. In other words, the period of the heating by the heating unit 121L-1 and the period of the heating by the heating unit 121L-2 are separated from each other.

The term "concurrent" used here does not mean a perfect non-overlap in terms of heating timing. Accordingly, for example, an overlap arising from an error in operation timing is not precluded.

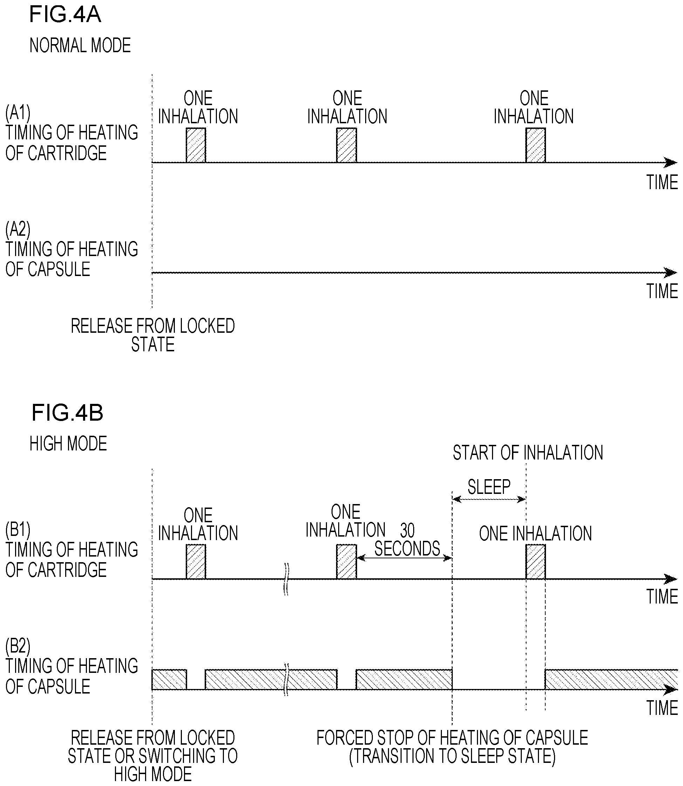

Figs. 4A and 4B are diagrams for explaining the normal mode and the high mode, wherein Fig. 4A is a diagram for explaining an example of the timing of heating in the normal mode, and Fig. 4B is a diagram for explaining an example of the timing of heating in the high mode.

(A1) in Fig. 4A illustrates the timing of the heating of the cartridge 20 in the normal mode. (A2) in Fig. 4A illustrates the timing of the heating of the capsule 30 in the normal mode.

The horizontal axis in (A1) and (A2) in Fig. 4A represents time, and the vertical axis represents whether heat is applied or not.

Power is supplied to the corresponding heating unit during a period in which heat is applied. Power is not supplied to the corresponding heating unit during a period in which heat is not applied.

The heating control in the normal mode is initiated by releasing a locked state.

The locked state is a state in which the control by the control unit 116L is stopped. For this reason, no aerosol is generated even when the user holding the mouthpiece 124L (see Fig. 3) in the mouth does inhalation.

The locked state is released when, for example, the operation button 11B (see Fig. 1) is pressed down three times successively within two seconds. All of the number of times of press-down operation, the button that is operated, and the time taken for the operation are just examples.

Upon initiation of the heating control in the normal mode, as illustrated in (A1) in Fig. 4A, the heating of the cartridge 20 is executed in link with the time period of inhalation.

The meaning of "in link with the time period of inhalation" is a link to the detection of inhalation by the sensor unit 112L.

Therefore, the cartridge 20 is heated for one second when inhalation for one second is detected, and the cartridge 20 is heated for two seconds when inhalation for two seconds is detected.

As illustrated in (A2) in Fig. 4A, in the normal mode, the heating of the capsule 30 is not executed regardless of whether or not inhalation is performed.

In the present embodiment, upon a lapse of preset time since the last detection of inhalation, the control unit 116L goes into a locked state.

Even with a transition to the locked state, the heating mode remains unchanged. There is no change in the heating mode at the time of recovery from the locked state either.

In the present embodiment, the preset time is six minutes (i.e., 360 seconds). This time is just an example. The lapse of six minutes since the last inhalation connotes that there is a high probability of cessation of the inhalation of an aerosol by the user.

Therefore, in the present embodiment, a transition to a locked state is executed for the purpose of reducing power consumed in the device body 11 (see Fig. 2). The same holds true for the high mode. That is, upon the lapse of six minutes since the last inhalation, the aerosol generation device 10 is controlled into the locked state.

A transition to the locked state is executed also when the user gives an instruction for the transition to the locked state. A manual transition to the locked state by the user is executed when, for example, before the lapse of six minutes since the last inhalation, the operation button 11B (see Fig. 1) is pressed down three times successively within two seconds. All of the number of times of press-down operation, the button that is operated, and the time taken for the operation are just examples.

(B1) in Fig. 4B illustrates the timing of the heating of the cartridge 20 in the high mode. (B2) in Fig. 4B illustrates the timing of the heating of the capsule 30 in the high mode.

The horizontal axis in (B1) and (B2) in Fig. 4B represents time, and the vertical axis represents whether heat is applied or not.

As described above, in the present embodiment, concurrent heating of the cartridge 20 and the capsule 30 is precluded. Therefore, the timing of the heating of the cartridge 20 does not overlap with the timing of the heating of the capsule 30.

Power is supplied to the corresponding heating unit during a period in which heat is applied. Power is not supplied to the corresponding heating unit during a period in which heat is not applied.

The heating control in the high mode is initiated by releasing the locked state or by switching from the normal mode to the high mode.

Upon initiation of the heating control in the high mode, as illustrated in (B2) in Fig. 4B, the heating of the capsule 30 starts. Basically, this heating continues until inhalation is detected, and the heating of the capsule 30 is stopped while the inhalation is detected.

As illustrated in (B1) and (B2) in Fig. 4B, the heating of the capsule 30 is stopped at the timing of the start of the heating of the cartridge 20. The initial temperature of the capsule 30 is, for example, the temperature of an environment in which the aerosol generation device 10 is used, for example, a room temperature.

In the aerosol generation device 10 according to the present embodiment, as illustrated in (B1) and (B2) in Fig. 4B, upon a lapse of 30 seconds since the last detection of inhalation, the heating of the capsule 30 is stopped forcibly to suppress the power consumption. That is, a transition to a sleep state occurs. In the sleep state, the temperature of the capsule 30 decreases gradually.

In the sleep state, the sensor unit 112L configured to detect inhalation is up and running although the heating of the capsule 30 is stopped. Therefore, upon detection of inhalation by the user in the sleep state, as illustrated in (B1) in Fig. 4B, the heating of the cartridge 20 is executed. Upon completion of the heating of the cartridge 20, as illustrated in (B2) in Fig. 4B, the heating of the capsule 30 starts.

In the present embodiment, the user is not notified of the transition to the sleep state; however, the user may be notified of it.

A transition to the locked state described earlier occurs upon a lapse of five minutes and thirty seconds in the sleep state.

### (Display Content of Display)

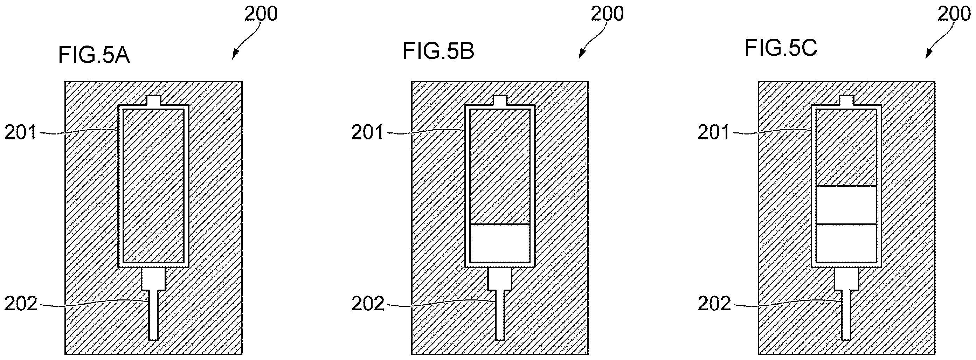

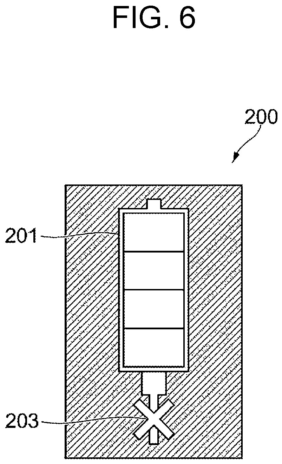

Figs. 5A to 5C and 6 are diagrams for explaining a being-charged-now main screen 200 displayed on the display 11A in the first embodiment.

The being-charged-now main screen 200 is a screen showing a charging status of a battery, and is displayed when a cable to which an external power supply is connected is plugged in.

The being-charged-now main screen 200 illustrated in Figs. 5A to 5C shows that the battery is being charged, and is displayed when a first condition is met upon the plugging-in of the cable. The first condition is, for example, a condition that the charging of the battery is started. This being-charged-now main screen 200 is displayed until the charging of the battery finishes, until the cable is unplugged, or until switching to a being-charged-now second screen to be described later occurs.

The being-charged-now main screen 200 illustrated in Fig. 6 shows that the battery cannot be charged, and is displayed when the cable to which the external power supply is connected is broken or when the AC adapter is non-supported one. This being-charged-now main screen 200 is displayed until the user performs an operation for requesting for ending the display.

The being-charged-now main screen 200 is an example of a first image.

On the being-charged-now main screen 200 illustrated in Figs. 5A to 5C and 6, a battery icon 201 and a cable icon 202 are arranged. A shut-off icon 203 is further arranged on the being-charged-now main screen 200 illustrated in Fig. 6. The battery icon 201 is an icon representing the charging status of the battery. The cable icon 202 is an icon representing that the battery is being charged. The shut-off icon 203 is an icon representing that the battery cannot be charged. The battery icon 201 is an example of a first display element. The cable icon 202 is an example of a fourth display element. The shut-off icon 203 is an example of a seventh display element.

In Figs. 5A to 5C and 6, the battery icon 201 symbolizes the battery so that the user will see that it represents the charging status of the battery; however, the graphical design of the battery icon 201 is not limited to this example. For example, it may be a rectangular icon.

In Figs. 5A to 5C, the cable icon 202 represents that the battery is being charged; however, this does not imply any limitation. An icon with any graphical design may be adopted as long as it represents that the battery is being charged.

In Fig. 6, the shut-off icon 203 symbolizes a cable with an X mark so that the user will see that the battery cannot be charged; however, the graphical design of the shut-off icon 203 is not limited to this example. An icon with any graphical design may be adopted as long as it represents that the battery cannot be charged. The shut-off icon 203 may be displayed in a blinking manner.

The battery icon 201 illustrated in Figs. 5A to 5C and 6 represents the amount of charge of the battery by means of four compartments. Each one compartment corresponds to 25% of a full charge capacity. In Figs. 5A to 5C, the number of compartments displayed ON is incremented each time the charged power reaches 25%. That is, the number of compartments displayed ON is incremented to one, next to two, next to three, ... The number of compartments displayed ON becomes four when the amount of charge reaches 100%. For example, since all of the four compartments are displayed OFF in Fig. 5A, the amount of charge is less than 25%. In Fig. 5B, one compartment is displayed ON, whereas the rest, three compartments, is displayed OFF; therefore, the amount of charge is not less than 25% but less than 50%. In Fig. 5C, two compartments are displayed ON, whereas the rest, two compartments, is displayed OFF; therefore, the amount of charge is not less than 50% but less than 75%.

In Figs. 5A to 5C, the compartment that is being charged may be displayed in a blinking manner, and the compartment(s) for which the charging has completed may be displayed ON.

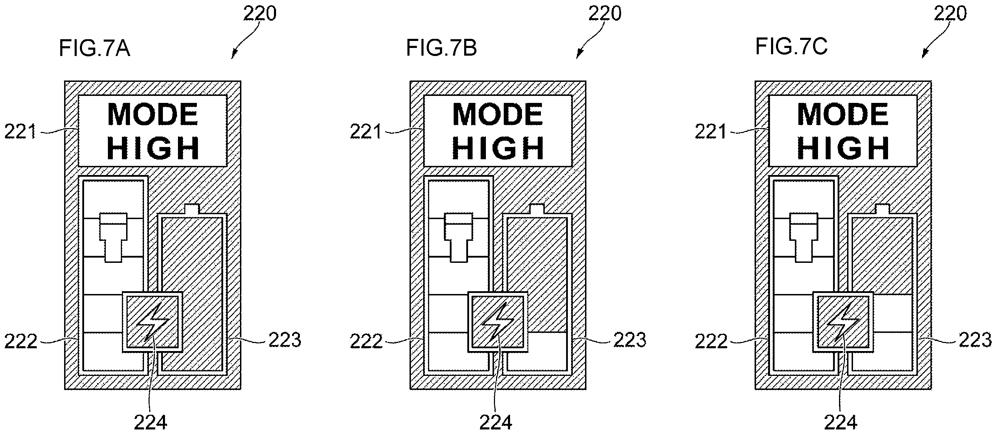

Figs. 7A to 9B are diagrams for explaining a being-charged-now second screen 220 displayed on the display 11A in the first embodiment.

The being-charged-now second screen 220 is a screen showing the charging status of the battery, for example, showing that the battery is being charged, and is displayed as a screen different from the being-charged-now main screen 200 when a second condition is met. The second condition is a condition different from the first condition which is described above and, for example, is a condition that the operation button 11B is pressed down in a state in which the being-charged-now main screen 200 illustrated in Figs. 5A to 5C is displayed.

The being-charged-now second screen 220 is an example of a second image.

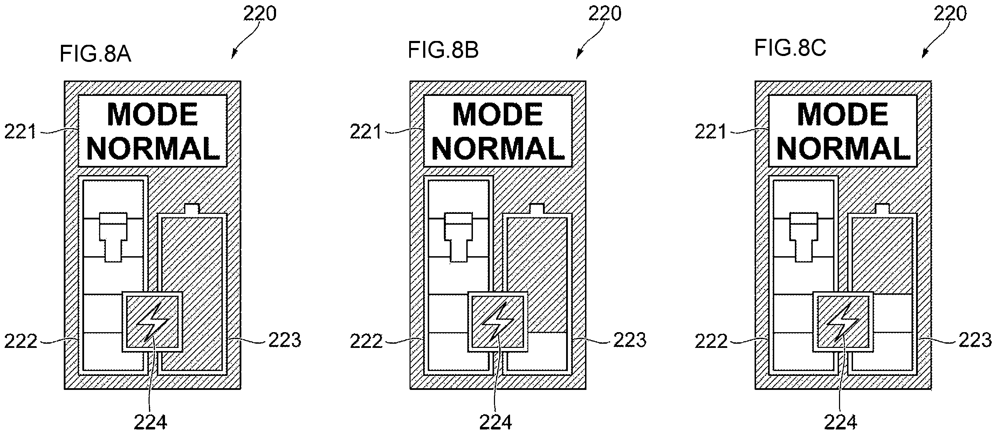

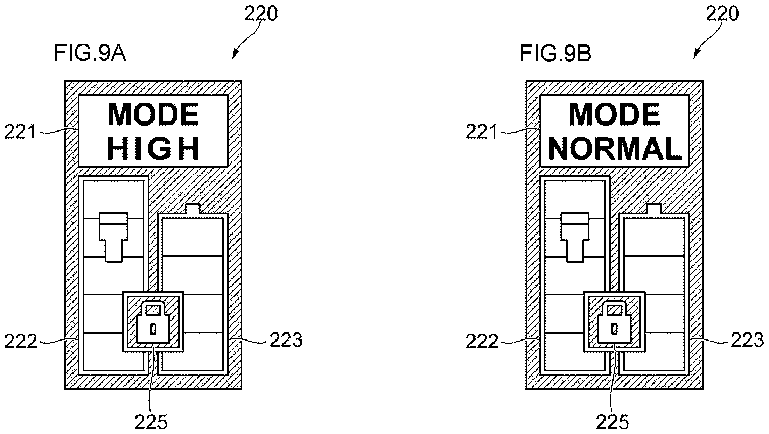

On the being-charged-now second screen 220 illustrated in Figs. 7A to 9B, a heating mode icon 221, a capsule icon 222, and a battery icon 223 are arranged. A thunder icon 224 is further arranged on the being-charged-now second screen 220 illustrated in Figs. 7A to 7C and 8A to 8C, and a lock icon 225 is further arranged on the being-charged-now second screen 220 illustrated in Figs. 9A to 9C. The heating mode icon 221 is an icon representing the current heating mode. The capsule icon 222 is an icon representing the remaining amount of the solid aerosol source inside the capsule 30. The battery icon 223 is an icon representing the amount of charge of the battery. The thunder icon 224 is an icon representing that the battery is being charged. The lock icon 225 is an icon that is arranged in place of the thunder icon 224 upon completion of the charging of the battery and represents that the control unit 116L has gone into a locked state. The capsule icon 222 is an example of a third display element. The battery icon 223 is an example of a second display element. The thunder icon 224 is an example of a fifth display element. The lock icon 225 is an example of a sixth display element.

In Figs. 7A to 9B, the capsule icon 222 has a rectangular shape, and a mark of the capsule 30 is placed on the second compartment from the top; however, the graphical design of the capsule icon 222 is not limited to this example. For example, its graphical design may symbolize the capsule 30. In this case, the graphic symbol of the capsule 30 is an example of a graphic symbol of a container in which an aerosol source is containable.

In Figs. 7A to 9B, the battery icon 223 symbolizes the battery so that the user will see that it represents the amount of charge of the battery; however, the graphical design of the battery icon 223 is not limited to this example. For example, it may be a rectangular icon.

In Figs. 7A to 7C and 8A to 8C, the thunder icon 224 represents that the battery is being charged; however, this does not imply any limitation. An icon with any graphical design may be adopted as long as it represents that the battery is being charged. For example, it may be an icon with any graphical design different from the graphical design of the cable icon 202 so as to make this screen distinguishable from the being-charged-now main screen 200.

In Figs. 9A and 9B, the lock icon 225 represents that the control unit 116L is in a locked state; however, this does not imply any limitation. An icon with any graphical design may be adopted as long as it represents that the control unit 116L is in a locked state. However, it should preferably be an icon with a graphical design different from the graphical design of the thunder icon 224 so as to be distinguishable from the thunder icon 224.

In Figs. 7A to 7C and 8A to 8C, the thunder icon 224 is superposed on both the capsule icon 222 and the battery icon 223, thereby offering easy-to-view display while allowing space for the heating mode icon 221.

In Figs. 9A and 9B, the lock icon 225 is superposed on both the capsule icon 222 and the battery icon 223, thereby offering easy-to-view display while allowing space for the heating mode icon 221.

In Figs. 7A to 9B, the capsule icon 222 and the battery icon 223 are arranged such that their longitudinal directions are in parallel with each other, thereby offering easy-to-view display while allowing space for the heating mode icon 221.

Figs. 7A to 7C illustrate the being-charged-now second screen 220 displayed during charging in a case where the heating mode is the high mode. Figs. 8A to 8C illustrates the being-charged-now second screen 220 displayed during charging in a case where the heating mode is the normal mode.

In Figs. 7A to 7C, the heating mode icon 221, by its character string "MODE HIGH", indicates that the current heating mode is the high mode. In Figs. 8A to 8C, the heating mode icon 221, by its character string "MODE NORMAL", indicates that the current heating mode is the normal mode.

The capsule icon 222 illustrated in Figs. 7A to 7C and 8A to 8C represents the amount of the aerosol source left in the capsule 30 by means of five compartments. Each one compartment corresponds to 20% of the entire remaining amount of the aerosol source that has not been used yet. The number of compartments displayed ON is decremented each time the amount of consumption of the aerosol source reaches 20%. That is, the number of compartments displayed ON is decremented from five to four, next to three, ... One compartment only is displayed ON when the remaining amount is 20% or less. However, it suffices for the capsule icon 222 to have just a graphical design that can represent the remaining amount of the aerosol source inside the capsule 30. That is, the capsule icon 222 does not necessarily have to represent the remaining amount of the aerosol source inside the capsule 30 actually.

The battery icon 223 illustrated in Figs. 7A to 7C and 8A to 8C represents the amount of charge of the battery by means of four compartments. Each one compartment corresponds to 25% of a full charge capacity. The number of compartments displayed ON is incremented each time the charged power reaches 25%. That is, the number of compartments displayed ON is incremented to one, next to two, next to three, ... The number of compartments displayed ON becomes four when the amount of charge reaches 100%. For example, since all of the four compartments are displayed OFF in Figs. 7A and 8A, the amount of charge is less than 25%. In Figs. 7B and 8B, one compartment is displayed ON, whereas the rest, three compartments, is displayed OFF; therefore, the amount of charge is not less than 25% but less than 50%. In Figs. 7C and 8C, two compartments are displayed ON, whereas the rest, two compartments, is displayed OFF; therefore, the amount of charge is not less than 50% but less than 75%.

In Figs. 7A to 7C and 8A to 8C, the compartment that is being charged may be displayed in a blinking manner, and the compartment(s) for which the charging has completed may be displayed ON.

Figs. 9A and 9B illustrate the being-charged-now second screen 220 displayed when the charging has completed in a case where the heating mode is the high mode. Fig. 9B illustrates the being-charged-now second screen 220 displayed when the charging has completed in a case where the heating mode is the normal mode.

In Fig. 9A, the heating mode icon 221, by its character string "MODE HIGH", indicates that the current heating mode is the high mode. In Fig. 9B, the heating mode icon 221, by its character string "MODE NORMAL", indicates that the current heating mode is the normal mode.

The capsule icon 222 and the battery icon 223 in Figs. 9A and 9B are the same as the capsule icon 222 and the battery icon 223 in Figs. 7A to 7C and 8A to 8C, respectively. The sole difference is that, in Figs. 9A and 9B, the lock icon 225 is arranged in place of the thunder icon 224 at the position where the thunder icon 224 of Figs. 7A to 7C and 8A to 8C is arranged.

### (Display Control of Display)

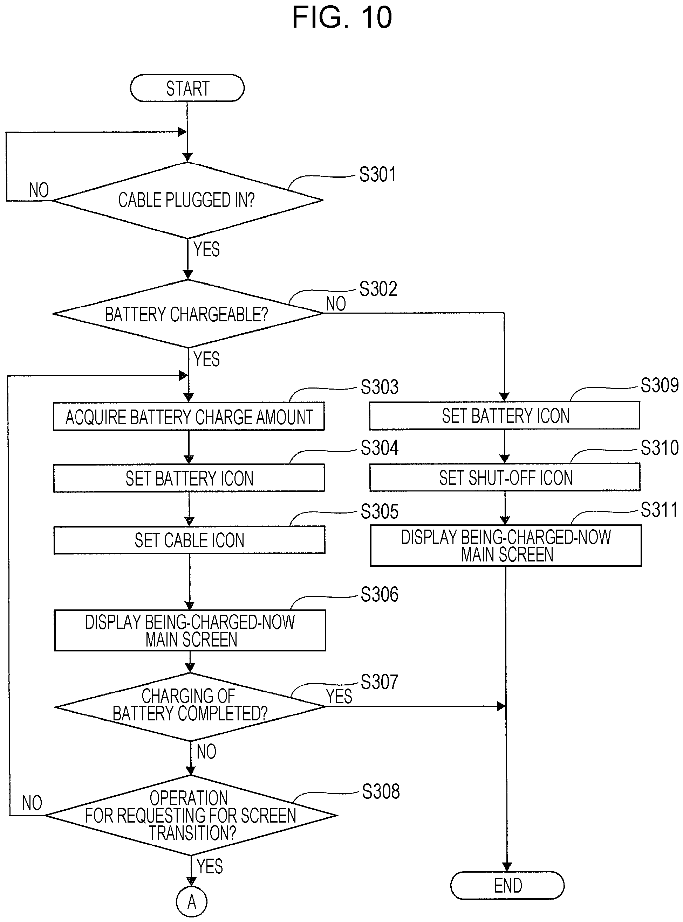

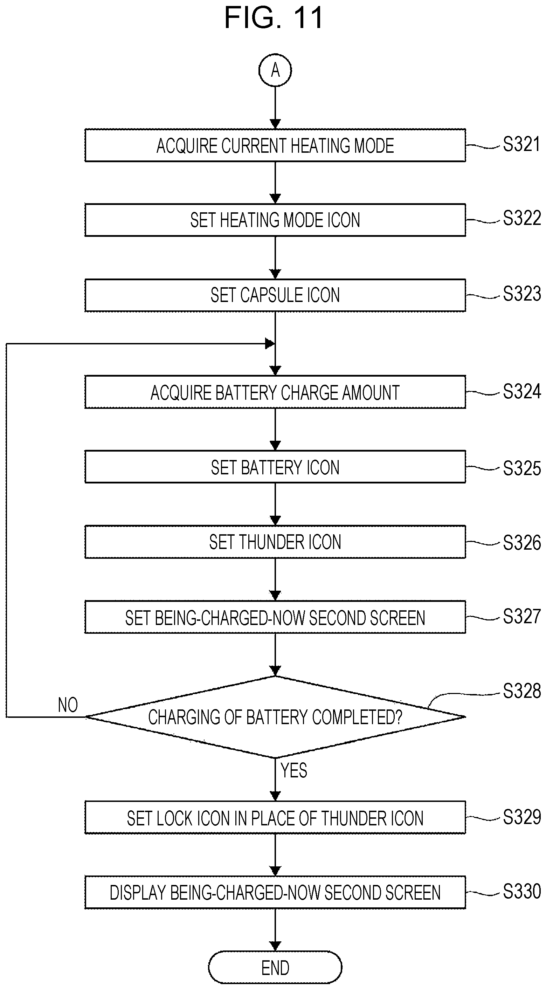

Figs. 10 and 11 are flowcharts for explaining display control of the display 11A of the aerosol generation device 10 according to the first embodiment.

The alphabet S in these drawings means step.

The processing illustrated in Figs. 10 and 11 is implemented through running programs. The programs mentioned here are stored in the storage unit 114L (see Fig. 3) and are run by the control unit 116L (see Fig. 3).

Fig. 10 illustrates the former half of display control of the display 11A of the aerosol generation device 10 when an operation for charging the battery is performed. Fig. 11 illustrates the latter half of the display control of the display 11A of the aerosol generation device 10 when the operation for charging the battery is performed. It is assumed here that the cable is not unplugged during the charging of the battery.

First, as illustrated in Fig. 10, the control unit 116L determines whether or not a cable connected to an external power supply is plugged in to the aerosol generation device 10 (step 301).

For example, the control unit 116L obtains an affirmative result in step 301 when the sensor unit 112L (see Fig. 3) detects the plugging-in of the cable.

On the other hand, the control unit 116L obtains a negative result in step 301 when the sensor unit 112L does not detect the plugging-in of the cable.

The control unit 116L repeats the determination in step 301 while negative results are obtained in step 301.

Upon obtaining the affirmative result in step 301, the control unit 116L determines whether or not the battery can be charged (step 302).

For example, if it is found on the basis of the amount of charge of the battery stored into the storage unit 114L as the time proceeds that the amount of charge of the battery is increasing, the control unit 116L obtains an affirmative result in step 302.

On the other hand, if it is found on the basis of the amount of charge of the battery stored into the storage unit 114L as the time proceeds that the amount of charge of the battery is not increasing, the control unit 116L obtains a negative result in step 302.

First, a case where an affirmative result is obtained in step 302 will now be described.

In this case, the control unit 116L acquires the amount of charge of the battery (step 303). Since the amount of charge of the battery is stored in the storage unit 114L as the time proceeds, the control unit 116L acquires it.

Then, on screen data prepared in the RAM, the control unit 116L sets the battery icon 201 that represents the amount of charge of the battery acquired in step 303 (step 304).

If the amount of charge of the battery acquired in step 303 is not less than 25% but less than 50%, the control unit 116L sets the battery icon 201 that includes control data for ON display of one compartment. If the amount of charge of the battery acquired in step 303 is not less than 50% but less than 75%, the control unit 116L sets the battery icon 201 that includes control data for ON display of two compartments. If the amount of charge of the battery acquired in step 303 is not less than 75% but less than 100%, the control unit 116L sets the battery icon 201 that includes control data for ON display of three compartments. If the amount of charge of the battery acquired in step 303 is 100%, the control unit 116L sets the battery icon 201 that includes control data for ON display of four compartments.

Next, the control unit 116L sets the cable icon 202 on the screen data prepared in the RAM (step 305).

After that, the control unit 116L causes the display 11A to display the being-charged-now main screen 200 obtained by setting the battery icon 201 and the cable icon 202 on the screen data in steps 304 and 305 (step 306). For example, the control unit 116L outputs data of the being-charged-now main screen 200 to the notification unit 113L, and the notification unit 113L outputs this data to the display 11A; by this means, the being-charged-now main screen 200 is displayed on the display 11A.

Next, the control unit 116L determines whether or not the charging of the battery has completed (step 307).

For example, the control unit 116L obtains an affirmative result in step 307 when it is memorized in the storage unit 114L that the amount of charge of the battery has reached 100%.

On the other hand, the control unit 116L obtains a negative result in step 307 when it is memorized in the storage unit 114L that the amount of charge of the battery has not reached 100%.

Upon obtaining the negative result in step 307, the control unit 116L determines whether or not an operation for requesting for screen transition is detected (step 308).

For example, the control unit 116L obtains an affirmative result in step 308 when the sensor unit 112L (see Fig. 3) detects an operation of pressing the operation button 11B (see Fig. 1) down twice.

On the other hand, the control unit 116L obtains a negative result in step 308 when the sensor unit 112L does not detect an operation of pressing the operation button 11B down twice.

Upon obtaining the negative result in step 308, the control unit 116L returns the process to step 303. Step 305 after the return may be skipped if the cable icon 202 remains set on the screen data prepared in the RAM.

Upon obtaining the affirmative result in step 308, the control unit 116L advances the process to Fig. 11.

Next, a case where a negative result is obtained in step 302 will now be described.

In this case, the control unit 116L sets the battery icon 201 on screen data prepared in the RAM (step 309). Since the amount of charge of the battery will never increase in this case, acquiring the amount of charge of the battery and reflecting it onto the battery icon 201 are not performed.

Next, the control unit 116L sets the shut-off icon 203 on the screen data prepared in the RAM (step 310).

After that, the control unit 116L causes the display 11A to display the being-charged-now main screen 200 obtained by setting the battery icon 201 and the shut-off icon 203 on the screen data in steps 309 and 310 (step 311). For example, the control unit 116L outputs data of the being-charged-now main screen 200 to the notification unit 113L, and the notification unit 113L outputs this data to the display 11A; by this means, the being-charged-now main screen 200 is displayed on the display 11A.

Then, the control unit 116L terminates the process. The control unit 116L terminates the process also in a case where the affirmative result is obtained in step 307.

In a case where the affirmative result is obtained in step 308 of Fig. 10, as illustrated in Fig. 11, the control unit 116L acquires the current heating mode (step 321). Since the current heating mode is stored in the storage unit 114L, the control unit 116L acquires it.

Then, on the screen data prepared in the RAM, the control unit 116L sets the heating mode icon 221 that represents the heating mode acquired in step 321 (step 322).

If the heating mode acquired in step 321 is the high mode, the control unit 116L sets the heating mode icon 221 that includes a character string "MODE HIGH". If the heating mode acquired in step 321 is the normal mode, the control unit 116L sets the heating mode icon 221 that includes a character string "MODE NORMAL".

Next, the control unit 116L sets the capsule icon 222 on the screen data prepared in the RAM (step 323). It is assumed here that acquiring the remaining amount in the capsule 30 and reflecting it onto the capsule icon 222 are not performed.

Next, the control unit 116L acquires the amount of charge of the battery (step 324). Since the amount of charge of the battery is stored in the storage unit 114L as the time proceeds, the control unit 116L acquires it.

Then, on the screen data prepared in the RAM, the control unit 116L sets the battery icon 223 that represents the amount of charge of the battery acquired in step 324 (step 325).

If the amount of charge of the battery acquired in step 324 is not less than 25% but less than 50%, the control unit 116L sets the battery icon 223 that includes control data for ON display of one compartment. If the amount of charge of the battery acquired in step 324 is not less than 50% but less than 75%, the control unit 116L sets the battery icon 223 that includes control data for ON display of two compartments. If the amount of charge of the battery acquired in step 324 is not less than 75% but less than 100%, the control unit 116L sets the battery icon 223 that includes control data for ON display of three compartments. If the amount of charge of the battery acquired in step 324 is 100%, the control unit 116L sets the battery icon 223 that includes control data for ON display of four compartments.

Next, the control unit 116L sets the thunder icon 224 on the screen data prepared in the RAM (step 326).

After that, the control unit 116L causes the display 11A to display the being-charged-now second screen 220 obtained by setting the heating mode icon 221, the capsule icon 222, the battery icon 223, and the thunder icon 224 on the screen data in steps 322, 323, 325, and 326 (step 327). For example, the control unit 116L outputs data of the being-charged-now second screen 220 to the notification unit 113L, and the notification unit 113L outputs this data to the display 11A; by this means, the being-charged-now second screen 220 is displayed on the display 11A.

Next, the control unit 116L determines whether or not the charging of the battery has completed (step 328).

For example, the control unit 116L obtains an affirmative result in step 328 when it is memorized in the storage unit 114L that the amount of charge of the battery has reached 100%.

On the other hand, the control unit 116L obtains a negative result in step 328 when it is memorized in the storage unit 114L that the amount of charge of the battery has not reached 100%.

Upon obtaining the negative result in step 328, the control unit 116L returns the process to step 324. Step 326 after the return may be skipped if the thunder icon 224 remains set on the screen data prepared in the RAM.

Upon obtaining the affirmative result in step 328, the control unit 116L sets the lock icon 225 in place of the thunder icon 224 having been set in step 326 on the screen data prepared in the RAM (step 329).

After that, the control unit 116L causes the display 11A to display the being-charged-now second screen 220 obtained by setting the heating mode icon 221, the capsule icon 222, the battery icon 223, and the lock icon 225 on the screen data in steps 322, 323, 325, and 329 (step 330). For example, the control unit 116L outputs data of the being-charged-now second screen 220 to the notification unit 113L, and the notification unit 113L outputs this data to the display 11A; by this means, the being-charged-now second screen 220 is displayed on the display 11A.

Though the control unit 116L does not reflect the remaining amount of the capsule 30 into the capsule icon 222 in the above description, this does not imply any limitation. That is, the remaining amount of the capsule 30 may be acquired, and this amount may be reflected into the capsule icon 222.

### (Conclusion)

In the aerosol generation device 10 according to the first embodiment, the being-charged-now main screen 200, which includes the battery icon 201 representing the charging status of the battery, is displayed when the first condition is satisfied while the battery is being charged, and the being-charged-now second screen 220, which includes the capsule icon 222 representing the remaining amount of the aerosol source inside the capsule 30 and the battery icon 223 representing the charging status of the battery, is displayed when the second condition is satisfied while the battery is being charged. This makes it possible to, for example, notify the user, in an easy-to-understand manner, of the charging status of the battery while making it also possible to notify the user of information other than the charging status of the battery when the battery is being charged.

### [Second Embodiment]

### (Overview, etc.)

In the present embodiment, an example of displaying an icon of the cartridge 20 in place of an icon of the capsule 30 on the display 11A will be described.

The appearance, internal structure, and the like of the aerosol generation device 10 taken as the subject of the present embodiment are the same as those of the aerosol generation device 10 having been described in the first embodiment. However, the sensor unit 112L provided in the device body 11 includes a liquid amount sensor that detects the remaining amount of the liquid aerosol source inside the cartridge 20. As the liquid amount sensor, a sensor that detects a liquid amount optically such as, for example, a sensor that detects a liquid-surface position based on reflected light coming from a liquid surface, may be preferably used. In addition, the storage unit 114L provided in the device body 11 stores information regarding the remaining amount of the liquid aerosol source inside the cartridge 20, too, as the information detected by the sensor unit 112L.

### (Display Content of Display)

A being-charged-now main screen 400 displayed on the display 11A in the second embodiment, though not illustrated, is the same as the being-charged-now main screen 200 illustrated in Figs. 5A to 5C and 6. In the second embodiment, icons included in the being-charged-now main screen 400 and corresponding to the battery icon 201, the cable icon 202, and the shut-off icon 203 will be referred to as a battery icon 401, a cable icon 402, and a shut-off icon 403 respectively, though not illustrated.

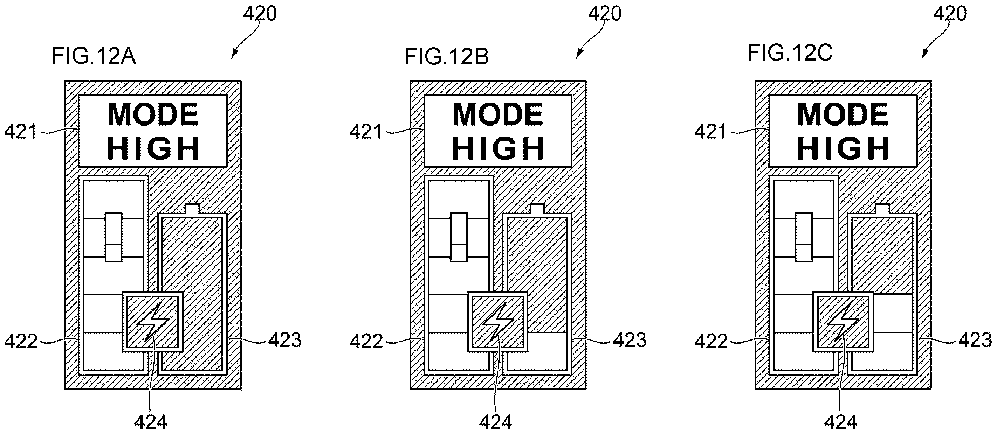

Figs. 12A to 14B are diagrams for explaining a being-charged-now second screen 420 displayed on the display 11A in the second embodiment.

The being-charged-now second screen 420 is a screen showing the charging status of the battery, for example, showing that the battery is being charged, and is displayed as a screen different from the being-charged-now main screen 400 when a second condition is met. The second condition is a condition different from a first condition for displaying the being-charged-now main screen 400, for example, a condition that the operation button 11B is pressed down in a state in which the being-charged-now main screen 400 showing the charging status of the battery is displayed.

The being-charged-now second screen 420 is an example of a second image.

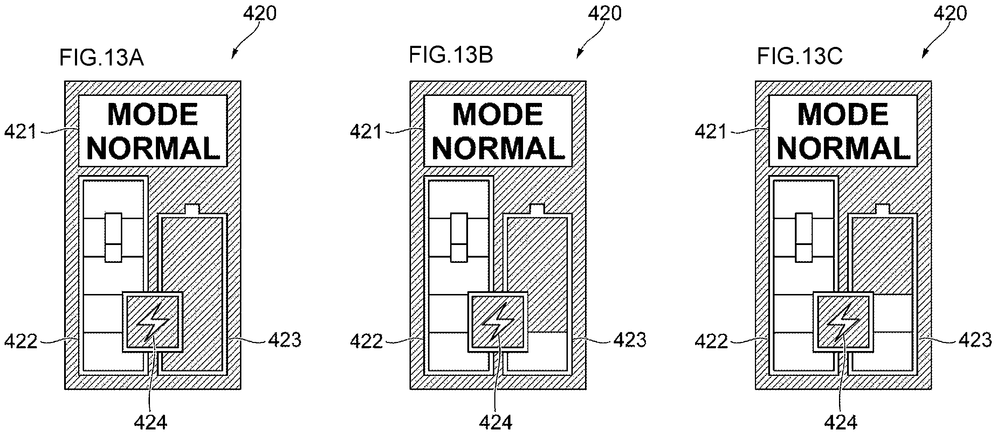

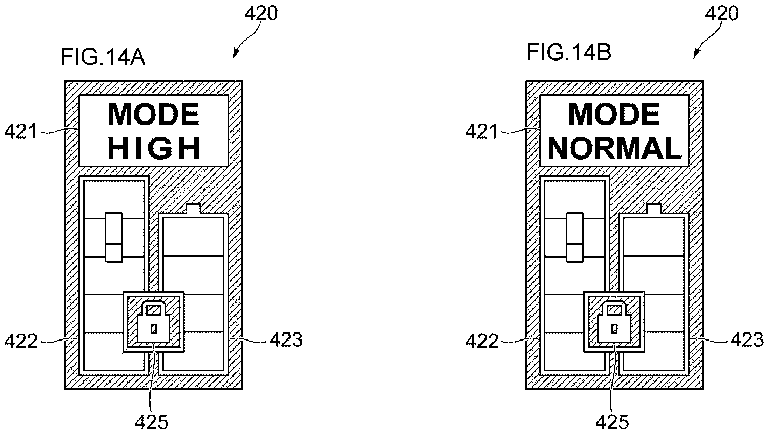

On the being-charged-now second screen 420 illustrated in Figs. 12A to 14B, a heating mode icon 421, a cartridge icon 422, and a battery icon 423 are arranged. A thunder icon 424 is further arranged on the being-charged-now second screen 420 illustrated in Figs. 12A to 12C and 13A to 13C, and a lock icon 425 is further arranged on the being-charged-now second screen 420 illustrated in Figs. 14A and 14B. The heating mode icon 421 is an icon representing the current heating mode. The cartridge icon 422 is an icon representing the remaining amount of the liquid aerosol source inside the cartridge 20. The battery icon 423 is an icon representing the amount of charge of the battery. The thunder icon 424 is an icon representing that the battery is being charged. The lock icon 425 is an icon that is arranged in place of the thunder icon 424 upon completion of the charging of the battery and represents that the control unit 116L has gone into a locked state. The cartridge icon 422 is an example of a third display element. The battery icon 423 is an example of a second display element. The thunder icon 424 is an example of a fifth display element. The lock icon 425 is an example of a sixth display element.

In Figs. 12A to 14B, the cartridge icon 422 has a rectangular shape, and a mark of the cartridge 20 is placed on the second compartment from the top; however, the graphical design of the cartridge icon 422 is not limited to this example. For example, its graphical design may symbolize the cartridge 20. In this case, the graphic symbol of the cartridge 20 is an example of a graphic symbol of a container in which an aerosol source is containable.

In Figs. 12A to 14B, the battery icon 423 symbolizes the battery so that the user will see that it represents the amount of charge of the battery; however, the graphical design of the battery icon 423 is not limited to this example. For example, it may be a rectangular icon.

In Figs. 12A to 12C and 13A to 13C, the thunder icon 424 represents that the battery is being charged; however, this does not imply any limitation. An icon with any graphical design may be adopted as long as it represents that the battery is being charged. For example, it may be an icon with any graphical design different from the graphical design of the cable icon 402 so as to make this screen distinguishable from the being-charged-now main screen 400.

In Figs. 14A and 14B, the lock icon 425 represents that the control unit 116L is in a locked state; however, this does not imply any limitation. An icon with any graphical design may be adopted as long as it represents that the control unit 116L is in a locked state. However, it should preferably be an icon with a graphical design different from the graphical design of the thunder icon 424 so as to be distinguishable from the thunder icon 424.

In Figs. 12A to 12C and 13A to 13C, the thunder icon 424 is superposed on both the cartridge icon 422 and the battery icon 423, thereby offering easy-to-view display while allowing space for the heating mode icon 421.

In Figs. 14A and 14B, the lock icon 425 is superposed on both the cartridge icon 422 and the battery icon 423, thereby offering easy-to-view display while allowing space for the heating mode icon 421.

In Figs. 12A to 14B, the cartridge icon 422 and the battery icon 423 are arranged such that their longitudinal directions are in parallel with each other, thereby offering easy-to-view display while allowing space for the heating mode icon 421.

Figs. 12A to 12C illustrate the being-charged-now second screen 420 displayed during charging in a case where the heating mode is the high mode. Figs. 13A to 13C illustrate the being-charged-now second screen 420 displayed during charging in a case where the heating mode is the normal mode.

In Figs. 12A to 12C, the heating mode icon 421, by its character string "MODE HIGH", indicates that the current heating mode is the high mode. In Figs. 13A to 13C, the heating mode icon 421, by its character string "MODE NORMAL", indicates that the current heating mode is the normal mode.

The cartridge icon 422 illustrated in Figs. 12A to 12C and 13A and 13C represents the amount of the aerosol source left in the capsule 30 by means of five compartments. Each one compartment corresponds to 20% of the entire remaining amount of the aerosol source that has not been used yet. The number of compartments displayed ON is decremented each time the amount of consumption of the aerosol source reaches 20%. That is, the number of compartments displayed ON is decremented from five to four, next to three, ... One compartment only is displayed ON when the remaining amount is 20% or less. However, it suffices for the cartridge icon 422 to have just a graphical design that can represent the remaining amount of the aerosol source inside the cartridge 20. That is, the cartridge icon 422 does not necessarily have to represent the remaining amount of the aerosol source inside the cartridge 20 actually.

The battery icon 423 illustrated in Figs. 12A to 12C and 13A to 13C represents the amount of charge of the battery by means of four compartments. Each one compartment corresponds to 25% of a full charge capacity. The number of compartments displayed ON is incremented each time the charged power reaches 25%. That is, the number of compartments displayed ON is incremented to one, next to two, next to three, ... The number of compartments displayed ON becomes four when the amount of charge reaches 100%. For example, since all of the four compartments are displayed OFF in Figs. 12A and 13A, the amount of charge is less than 25%. In Figs. 12B and 13B, one compartment is displayed ON, whereas the rest, three compartments, is displayed OFF; therefore, the amount of charge is not less than 25% but less than 50%. In Figs. 12C and 13C, two compartments are displayed ON, whereas the rest, two compartments, is displayed OFF; therefore, the amount of charge is not less than 50% but less than 75%.

In Figs. 12A to 12C and 13A to 13C, the compartment that is being charged may be displayed in a blinking manner, and the compartment(s) for which the charging has completed may be displayed ON.

Fig. 14A illustrates the being-charged-now second screen 420 displayed when the charging has completed in a case where the heating mode is the high mode. Fig. 14B illustrates the being-charged-now second screen 420 displayed when the charging has completed in a case where the heating mode is the normal mode.

In Fig. 14A, the heating mode icon 421, by its character string "MODE HIGH", indicates that the current heating mode is the high mode. In Fig. 14B, the heating mode icon 421, by its character string "MODE NORMAL", indicates that the current heating mode is the normal mode.

The cartridge icon 422 and the battery icon 423 in Figs. 14A and 14B are the same as the cartridge icon 422 and the battery icon 423 in Figs. 12A to 12C and 13A to 13C, respectively. The sole difference is that, in Figs. 14A and 14B, the lock icon 425 is arranged in place of the thunder icon 424 at the position where the thunder icon 424 of Figs. 12A to 12C and 13A to 13C is arranged.

### (Display Control of Display)

Display control of the display 11A of the aerosol generation device 10 in the second embodiment is the same as that of Figs. 10 and 11 except that processing regarding the capsule 30 in the flowchart therein is replaced with processing regarding the cartridge 20.

### (Conclusion)

In the aerosol generation device 10 according to the second embodiment, the being-charged-now main screen 400, which includes the battery icon 401 representing the charging status of the battery, is displayed when the first condition is satisfied while the battery is being charged, and the being-charged-now second screen 420, which includes the cartridge icon 422 representing the remaining amount of the aerosol source inside the cartridge 20 and the battery icon 423 representing the charging status of the battery, is displayed when the second condition is satisfied while the battery is being charged. This makes it possible to, for example, notify the user, in an easy-to-understand manner, of the charging status of the battery while making it also possible to notify the user of information other than the charging status of the battery when the battery is being charged.

### [Other Embodiments]

Though embodiments of the present invention have been described above, the technical scope of the present invention is not limited to the scope of description in the foregoing embodiments. It is apparent from the recitation in the claims that the foregoing embodiments with various kinds of changes or improvements applied thereto are also encompassed within the technical scope of the present invention.

In the foregoing embodiments, an aerosol is generated by heating a liquid aerosol source by using the heating unit 121L-1; however, the aerosol may be generated by vibrating the liquid aerosol source by using a vibrator. The heating unit 121L-1 may be configured as a susceptor made of a conductive material such as metal, and an aerosol may be generated by induction heating of the susceptor by using an electromagnetic induction source.

Though a case where the aerosol generation device 10 (see Fig. 1) is an electronic cigarette has been described in the foregoing embodiments, it may be a medical inhaler such as a nebulizer. In a case where the aerosol generation device 10 is a nebulizer, the liquid aerosol source and/or the solid aerosol source may contain medicine to be inhaled by a patient.

Though a case where the present invention is applied to the aerosol generation device 10 has been described in the foregoing embodiments, this does not imply any limitation. The present invention can be applied to any kind of device as long as the device includes a display capable of displaying a state of the device. The device is an example an information display device.

### Reference Signs List

- 10: aerosol generation device
- 11A: display
- 11B: operation button
- 20: cartridge
- 30: capsule
- 116L: control unit
- 121L-1, 121L-2: heating unit
- 200, 400: being-charged-now main screen
- 201, 401: battery icon
- 202, 402: cable icon
- 203, 403: shut-off icon
- 220, 420: being-charged-now second screen
- 221, 421: heating mode icon
- 222: capsule icon
- 223, 423: battery icon
- 224, 424: thunder icon
- 225, 425: lock icon
- 422: cartridge icon

## Claims

1. An aerosol generation device, comprising:
a heating unit that receives power from a battery and heats an aerosol source;
a display unit for displaying a state of the aerosol generation device; and
a control unit that performs control to, when a first condition is satisfied while the battery is being charged, display on the display unit a first image representing that the battery is being charged, and performs control to, when a second condition different from the first condition is satisfied while the battery is being charged, display on the display unit a second image representing that the battery is being charged, wherein
the first image includes a first display element representing a charging status of the battery, and
the second image includes a second display element representing the charging status of the battery and a third display element representing a remaining amount of the aerosol source.

2. The aerosol generation device according to claim 1, wherein
the second display element is a graphic symbol of the battery, and
the third display element is a graphic symbol of a container in which the aerosol source is containable.

3. The aerosol generation device according to claim 1, wherein
the first image further includes a fourth display element representing that the battery is being charged, and
the second image further includes a fifth display element graphically different from the fourth display element and representing that the battery is being charged.

4. The aerosol generation device according to claim 3, wherein
the second image includes the fifth display element in a state of being superposed on both the second display element and the third display element.

5. The aerosol generation device according to claim 3, wherein
the control unit performs the control to, upon completion of charging of the battery, display on the display unit the second image in which a sixth display element representing that the aerosol generation device is locked is arranged in place of the fifth display element at a position where the fifth display element was arranged.

6. An information display device, comprising:
a display unit for displaying a state of the information display device; and
a control unit that performs control to, when a first condition is satisfied while a battery is being charged, display on the display unit a first image representing a charging status of the battery, and performs control to, when a second condition different from the first condition is satisfied while the battery is being charged, display on the display unit a second image different from the first image and representing the charging status of the battery.

7. The information display device according to claim 6, further comprising:
an operation unit that is operated by a user, wherein
the first condition is a condition that charging of the battery is started, and
the second condition is a condition that the operation unit is operated, with the first image displayed on the display unit.

8. The information display device according to claim 6, wherein
the first image represents that the battery is being charged by using a graphic symbol of the battery and a graphic symbol of a cable connected to the battery, and
the second image represents that the battery is being charged by using a graphic symbol of the battery and a graphic symbol of a thunder

9. The information display device according to claim 6, wherein
the control unit performs the control to, in a case where the battery is unable to be charged, display on the display unit the first image further including a seventh display element representing that the battery is unable to be charged.
